# FASCICULE DE BREVET EUROPEEN

(11) **EP 0 678 825 B1**
(45) Date de publication et mention de la délivrance du brevet: **06.03.2002**
(21) Numéro de dépôt: 95440017.2
(22) Date de dépôt: 24.04.1995
(51) Int. Cl.: G06K 13/08

(54) **Dispositif d'identification et de contrôle des moyens de paiement et notamment des chèques et des cartes de paiement à circuit integré ou à piste magnétique**
Vorrichtung zum Identifizieren und Kontrollieren von Bezahlungsmitteln und insbesondere von Schecks und Bezahlungskarten mit integrierten Schaltungen oder magnetischer Spur
Payment means identifying and controlling device and particularly for cheques and payment cards comprising integrated circuits or magnetic tracks

(30) Priorité: 22.04.1994 FR 9405061
(43) Date de publication de la demande: 25.10.1995
(73) Titulaire: WYNID TECHNOLOGIES S.A., 34980 SAINT CLEMENT DE RIVIERE (FR)
(72) Inventeur: Trial, François, F-34130 Saint Aunes (FR); Welmant, Bernard, F-30110 Grand Combe (FR)
(74) Mandataire: Rhein, Alain

(56) Documents cités:
- EP-A- 0 231 409
- FR-A- 2 603 405
- GB-A- 2 080 004

## Description

La présente invention a pour objet un dispositif d'identification et de contrôle de trois moyens de paiement différents à savoir des chèques, des cartes à circuit intégré et des cartes à piste magnétique.

On connaît aujourd'hui des appareils pour la lecture des cartes bancaires du type cartes à mémoire, notamment cartes à circuit intégré ou cartes à piste magnétique et des appareils pour la lecture des chèques, connectables aux dispositifs de traitement et de transfert des transactions de paiement. Les lecteurs de chèques réalisent, outre les fonctions de lecture de la piste portant le numéro d'identification bancaire, la rédaction du chèque, l'endossement, l'affichage du montant non loin de ladite piste appelé aussi opération de postmarquage et la vérification sur fichier des chéquiers volés, perdus ou interdits.

Ces appareils se présentent généralement sous la forme d'un boîtier comportant une ou deux entrées pour le moyen de paiement et renfermant une carte électronique, et raccordés, comme cela est décrit dans le document FR-A-2 611 061, à une prise péri-informatique d'un terminal de télétexte pour l'échange d'informations entre ledit terminal et le lecteur, ou comme cela est décrit dans la demande de brevet Fr-A-2 688 078 au nom de la demanderesse, à un ordinateur ou à une unité de contrôle connectée audit ordinateur.

Cependant, dans le cas de l'utilisation d'un lecteur de chèque, d'une part l'opération de postmarquage entraîne un ralentissement des opérations en caisse et donc une baisse de rendement et d'autre part, pour les commerces qui ne traitent pas journellement un grand nombre de chèques, l'investissement dans un lecteur muni d'une fonction de postmarquage semble injustifié.

Or le nombre de chèques qui demeurent impayés étant en augmentation régulière et les autorités bancaires autorisant désormais la consultation de leur fichier de chéquiers volés, perdus ou faisant l'objet d'une interdiction, il s'avère important pour le commerçant de posséder un appareil qui permettrait, outre la lecture des cartes bancaires, la lecture des chèques et plus particulièrement la lecture de la piste permettant de vérifier la solvabilité du client.

Le document FR 2 603 405 décrit un appareil de traitement destiné à échanger des données avec des supports de données portatifs comprenant un premier type de dispositif qui porte une piste magnétique et un second type de dispositif qui contient un transducteur magnétique, ledit appareil comprenant des moyens d'entrée/sortie magnétiques logés dans le boîtier de l'appareil de façon à pouvoir interagir avec lesdits supports.

Toutefois ce dispositif permet d'échanger des données de manière magnétique avec seulement deux types de supports de données portatifs. En outre il ne comporte qu'une seule fente pour la lecture de l'un ou l'autre de ces supports de paiement, laquelle fente étant équipée d'une butée permettant d'adapter sa longueur audit moyen de paiement, ce qui oblige l'opérateur à régler la position de la butée à chaque changement de type de support de paiement.

Le document GB 2 080 004 concerne un dispositif d'identification et de contrôle de moyens de paiement comprenant un boîtier muni d'une fente permettant l'introduction de chèques ou de cartes à piste magnétique, lequel boîtier renferme des moyens de lecture optique et magnétique, un micro-contrôleur, des mémoires et des circuits électroniques d'entrée/sortie.

Cependant ce dispositif n'est capable de lire, à partir d'une seule fente, que deux moyens de paiement à savoir les chèques et les cartes à piste magnétique.

Le document EP-A-0 231 409 a pour objet un lecteur de cartes à mémoire, comprenant une carte à circuit imprimé disposée dans un boîtier pourvu d'une fente frontale pour l'introduction de ladite carte à mémoire et des contacts flexibles permettant d'établir le contact électrique entre les circuits électroniques du lecteur et les zones de contact de la puce de la carte à mémoire. Ce dispositif ne permet la lecture que d'un seul type de moyen de paiement à savoir les cartes à puce ou à mémoire.

Les appareils existants n'offrent donc pas la possibilité de traiter trois moyens de paiment différent, ce qui oblige l'utilisateur à disposer d'au moins deux appareils différents.

La présente invention a pour but de remédier à cet inconvénient en proposant un appareil de lecture de moyens de paiement qui permet de regrouper plusieurs fonctions en autorisant la lecture de trois moyens de paiement différents, à savoir les cartes à circuit intégré, les cartes à piste magnétique et la piste d'identification des chèques.

L'appareil selon l'invention est destiné plus particulièrement à être relié au dispositif de traitement et de transfert monétique adaptable à des ordinateurs standards décrit dans la demande FR-A-2 688 078.

Selon l'invention le dispositif d'identification et de contrôle de trois moyens de paiement différents à savoir des chèques, des cartes à circuit intégré et des cartes à piste magnétique comprend un boîtier équipé de circuits électroniques d'entrée/sortie connectés à un réseau informatique, ledit boîtier renfermant une carte électronique de gestion et trois lecteurs de moyens de paiement respectivement de chèques, de cartes à piste magnétique et de cartes à circuit intégré, ledit boîtier étant muni d'une part de deux fentes parallèles, une première fente permettant l'introduction de cartes à piste magnétique, et une deuxième fente dont la largeur n'autorise que le passage de chèques et d'autre part d'une ouverture de largeur sensiblement égale à celle d'une carte à circuit intégré et ladite carte électronique de gestion étant apte à gérer les trois fonctions de paiement en sélectionnant, selon l'un des trois moyens de paiement utilisé, le traitement approprié pour la lecture et le traitement des données.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue en perspective de l' appareil selon l'invention
- la figure 2 représente un schéma bloc de la carte électronique de l'appareil
- la figure 3 représente un schéma bloc de sa fonction de lecture de chèques

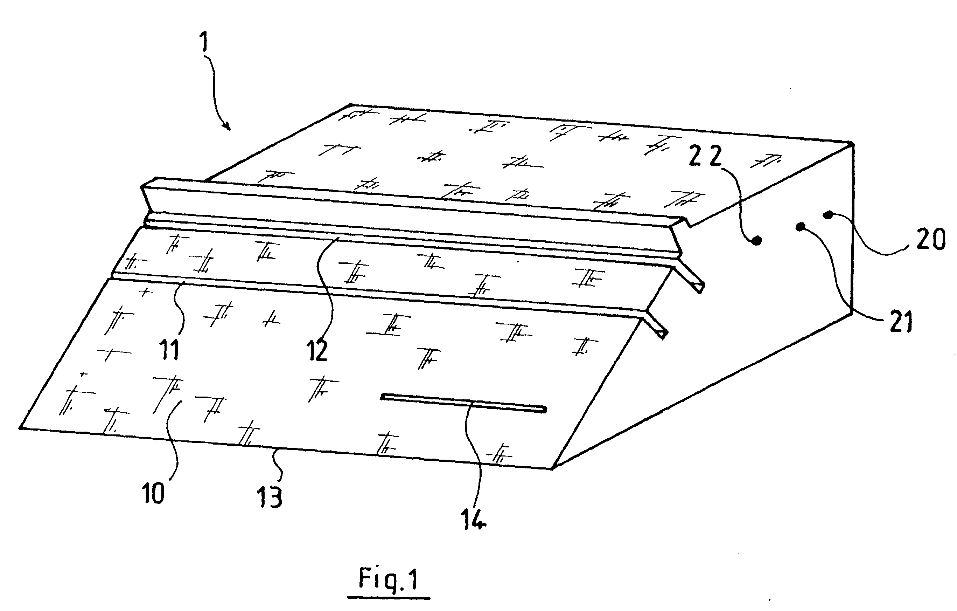

Si on se réfère à la figure 1 on peut voir qu'un appareil de lecture de moyens de paiement selon l'invention comporte un boîtier 1 en forme de parallélépippède tronqué dont la face avant 10 est inclinée. Dans cette face avant sont ménagées, sur toute sa largeur une fente transversale 11 pour l'introduction d'une carte à piste magnétique et une fente transversale 12 pour l'introduction d'un chèque, les deux fentes 11 et 12 étant parallèles au côté 13 de plus grande longueur de la face 10. Une ouverture 14 est en outre pratiquée en dessous des deux fentes 11 et 12, pour l'introduction d'une carte à circuit intégré.

Le boîtier 1 est équipé préférentiellement de connecteurs standards 20 connus sous le nom de RS 232 pour la connexion directe à un terminal tel que par exemple un micro-ordinateur, une unité de contrôle décrite dans le document FR-A-2 688 078, un terminal de vente ou tout autre périphérique.

Le boîtier 1 est équipé également d'une interface 21 de type RS485 pour la connexion à un réseau local de type boucle de courant fonctionnant par optocoupleur, comme décrit dans le document FR -A- 2 688 078, et d'une connexion 22 le reliant à un clavier afficheur connu sous le nom de PINPAD pour la saisie du code confidentiel lors de l'introduction d'une carte à circuit intégré.

Ces interfaces permettent de façon avantageuse une connexion aisée quelle que soit la configuration dans laquelle l'appareil est utilisé.

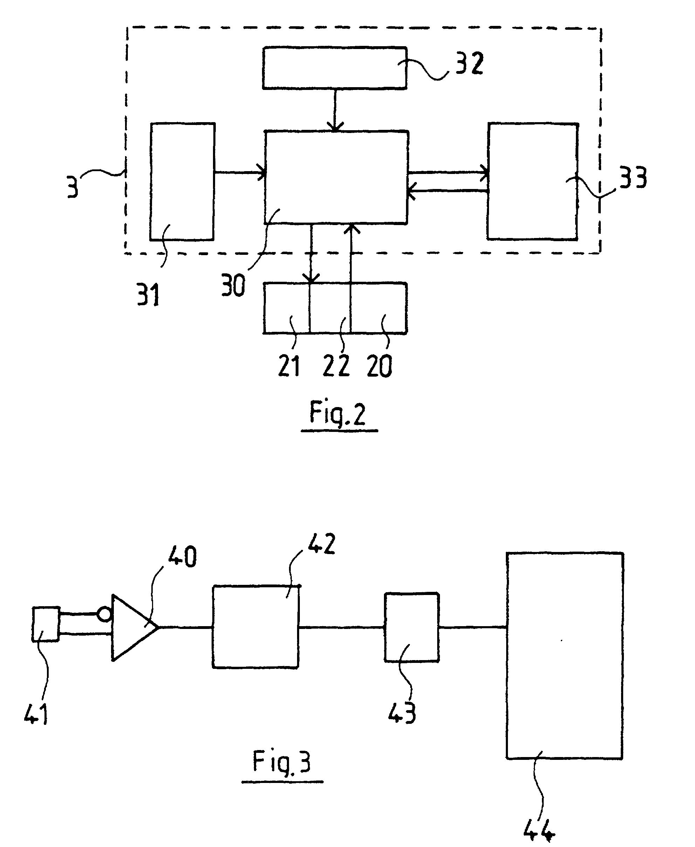

Si on se réfère à la figure 2 on peut voir que l'appareil comprend une carte électronique 3 comportant un micro-contrôleur 30 gérant trois lecteurs de moyens de paiement 31, 32 et 33, respectivement de chèques, cartes à piste magnétique et cartes à circuit intégré, ainsi que les trois circuits d'entrée-sortie 20, 21, 22 reliés au microcontrôleur 30 et permettant l'envoi ou la réception de données vers ou en provenance d'un réseau informatique bancaire, sous la forme de signaux électriques analogiques ou numériques, le micro-controleur 30 pouvant intégrer un convertisseur analogique-numérique et un convertisseur numérique-analogique.

Sur la figure 3 on voit que la fonction lecture de la piste CMC7 des chèques est réalisée par un système électronique 4 comprenant une tête de lecture 41, un amplificateur 40, un circuit de filtrage 42, un circuit de mise en forme 43 et un circuit de traitement numérique 44.

Le fonctionnement de l'appareil selon l'invention peut être le suivant.

Lorsqu'un chèque est introduit dans la fente 11 le signal capté par la tête de lecture 41 est amplifié par l'amplificateur 40 puis filtré par le circuit 42 pour ensuite être traité numériquement au moyen d'un algorithme intégrant une détection et une correction d'erreur afin de restituer les caractères enregistrés sur la piste CMC7, alors que le micro-contrôleur 30 signale à un serveur monétique, non représenté, que le moyen de paiement par chèque est utilisé, le signal ainsi traité et représentatif de la piste CMC7 est transféré par l'intermédiaire de l'interface 20 vers ledit serveur monétique.

De même, lorsqu'une carte à mémoire est introduite dans l'ouverture 14 le micro-contrôleur 30 procède à l'identification de la carte et signale au serveur monétique que le moyen de paiement par carte à mémoire est utilisé.

De même encore, lorsqu'une carte à piste magnétique est passée dans la fente 12 le micro-contrôleur 30 signale au serveur monétique que le moyen de paiement par carte magnétique est utilisé.

L'appareil selon l'invention est adapté pour la lecture des cartes à piste magnétique et de la piste CMC7 des chèques et pour la lecture et l'écriture des cartes à circuit intégré, le système de lecture de chèques étant en outre simplifié puisqu'il ne réalise pas d'opération de postmarquage ralentissant les opérations en caisse.

La forme spécifique du boîtier et sa compacité ainsi que la disposition des fentes et de l'ouverture pour cartes à circuit intégré permet un usage aisé de l'appareil, tandis que la réunion de trois fonctions de lecture de trois moyens de paiement différents réduit considérablement le coût de l' installation par rapport à celles existant à ce jour.

Il va de soi que la présente invention ne saurait être limitée à la description qui précède d'un de ses modes de réalisation, susceptible de subir un certain nombre de modifications sans pour autant sortir du cadre de l'invention.

## Revendications

1. Dispositif d'identification et de contrôle de trois moyens de paiement différents à savoir des chèques, des cartes à circuit intégré et des cartes à piste magnétique, le dispositif type comprenant un boîtier (1) équipé de circuits électroniques d'entrée/sortie (20, 21, 22) connectés à un réseau informatique, ledit boîtier renfermant une carte électronique de gestion (3) et trois lecteurs de moyens de paiement (31,32,33) respectivement de chèques, de cartes à piste magnétique et de cartes à circuit intégré, ledit boîtier (1) étant muni d'une part de deux fentes parallèles (11, 12), une première fente (11) permettant l'introduction de cartes à piste magnétique, et une deuxième fente (12) dont la largeur n'autorise que le passage de chèques et d'autre part d'une ouverture (14) de largeur sensiblement égale à celle d'une carte à circuit intégré et ladite carte électronique de gestion étant apte à gérer les trois fonctions de paiement en sélectionnant, selon l'un des trois moyens de paiement utilisé, le traitement approprié pour la lecture et le traitement des données.

2. Dispositif selon la revendication 1 **caractérisé en ce que** le lecteur de chèques comporte une tête de lecture (41), un amplificateur (40), un circuit de filtrage (42), un circuit de mise en forme (43) et un circuit de traitement numérique (44) du signal, au moyen d'un algorithme, provenant de la tête de lecture (41), de l'amplificateur (40), du circuit de filtrage (42) et du circuit de mise en forme (43).

3. Dispositif selon la revendication 2 **caractérisé en ce que** l'algorithme intègre une détection et une correction d'erreur afin de restituer les caractères enregistrés sur la piste CMC7 du chèque.

4. Dispositif selon l'une des revendications 1 à 3 **caractérisé en ce que** la boitier (1) est en forme de parallélépipède tronqué dont la face avant (10) est inclinée et dans la quelle sont ménagées, sur toute sa largeur, une fente transversale (11) pour l'introduction d'une carte à piste magnétique, une fente transversale (12) pour l'introduction d'un chèque et une ouverture (14) pour l'introduction d'une carte à circuit intégré.

## Patentansprüche

1. Vorrichtung zur Identifizierung und Prüfung von drei unterschiedlichen Zahlungsmitteln, nämlich Schecks, integrierten Schaltungskarten und Magnetkarten, wobei die Vorrichtung ein Gehäuse (1) umfaßt, das mit elektronischen Ein-/ Ausgabeschaltungen (20, 21, 22) versehen ist, die mit einem Datenverarbeitungsnetz verbunden sind, wobei das genannte Gehäuse eine elektronische Steuerkarte (3) und drei Zahlungsmittel-Lesegeräte (31, 32, 33), respektive für Schecks, Magnetkarten und integrierte Schaltungskarten, enthält, wobei das genannte Gehäuse (1), einerseits, mit zwei parallelen Schlitzen (11, 12), einem ersten Schlitz (11), der die Einführung von Magnetkarten erlaubt, und einem zweiten Schlitz (12), dessen Breite nur den Durchgang von Schecks erlaubt, und, andererseits, eine Öffnung (14) einer Breite, die im wesentlichen gleich derjenigen einer integrierten Schaltungskarte ist, versehen ist, und wobei die genannte elektronische Steuerkarte geeignet ist, die drei Zahlungsfunktionen zu steuern, indem sie je nach einem der drei verwendeten Zahlungsmittel die geeignete Verarbeitung zum Lesen und zur Datenverarbeitung wählt.

2. Vorrichtung nach Anspruch 1, **dadurch gekennzeichnet, daß** das Scheck-Lesegerät einen Lesekopf (41), einen Verstärker (40), eine Filtrierschaltung (42), eine Gestaltungsschaltung (43) und eine Schaltung (44) zur digitalen Verarbeitung, mittels eines Algorithmus, des Signals, das vom Lesekopf (41), vom Verstärker (40), von der Filtrierschaltung (42) und von der Gestaltungsschaltung (43) kommt, umfaßt.

3. Vorrichtung nach Anspruch 2, **dadurch gekennzeichnet, daß** der Algorithmus eine Fehlerdetektion und eine -Korrektur integriert, um die auf der CMC7-Leiste des Schecks gespeicherten Buchstaben und Ziffern zu rekonstruieren.

4. Vorrichtung nach einem der Ansprüche 1 bis 3, **dadurch gekennzeichnet, daß** das Gehäuse (1) als ein Quaderstumpf ausgestaltet ist, dessen Vorderfläche (10) schräg ist und in dem über seine ganze Breite einen Querschlitz (11) zum Einführen einer Magnetkarte, einen Querschlitz (12) zum Einführen eines Schecks und eine Öffnung (14) zum Einführen einer integrierten Schaltungskarte vorgesehen sind.

## Claims

1. Device for identifying and checking three different payment means, namely cheques, integrated-circuit cards and magnetic-strip cards, the device including a casing (1) provided with electronic input/output circuits (20, 21, 22) connected to a data-processing network, said casing containing an electronic control card (3) and three payment-means reading devices (31, 32, 33) for cheques, magnetic-strip cards and integrated-circuit cards, respectively, said casing (1) being provided, on the one hand, with two parallel slits (11, 12), a first slit (11) allowing inserting magnetic-strip cards and a second slit (12) the width of which only authorises the passing through of cheques and, on the other hand, an opening (14) with a width substantially equal to that of an integrated-circuit card, and said electronic control card being capable of controlling the three payment functions by selecting, according to one of the three payment means used, the adequate processing for reading and data processing.

2. Device according to claim 1, **characterised in that** the cheque reading-device includes a reading head (41), an amplifier (40), a filtering circuit (42), a shaping circuit (43) and a circuit (44) for digitally processing, by means of an algorithm, the signal issued by the reading head (41), the amplifier (40), the filtering circuit (42) and the shaping circuit (43).

3. Device according to claim 2, **characterised in that** the algorithm integrates an error detection and an error correction, in order to restore the characters recorded on the CMC7 strip of the cheque.

4. Device according to any of claims 1 to 3, **characterised in that** the casing (1) is in the form of a truncated parallelepiped the front face (10) of which is inclined and in which are provided for, over its full width, a transversal slit (11) for inserting a magnetic-strip card, a transversal slit (12) for inserting a cheque and an opening (14) for inserting an integrated-circuit card.
